# EUROPÄISCHE PATENTSCHRIFT

(11) **EP 1 977 194 B1**
(45) Veröffentlichungstag und Bekanntmachung des Hinweises auf die Patenterteilung: **24.09.2014**
(21) Anmeldenummer: 06830591.1
(22) Anmeldetag: 13.12.2006
(51) Int. Cl.: G01D 5/04, B62D 15/02

(54) **WINKELMESSVORRICHTUNG ZUR MESSUNG EINER ABSOLUTEN WINKELPOSITION**
ANGLE MEASURING APPARATUS FOR MEASURING AN ABSOLUTE ANGULAR POSITION
DISPOSITIF DE MESURE D'ANGLE DESTINE A MESURER UNE POSITION ANGULAIRE ABSOLUE

(30) Priorität: 11.01.2006 DE 102006001606
(43) Veröffentlichungstag der Anmeldung: 08.10.2008
(73) Patentinhaber: Continental Teves AG & Co. oHG, 60488 Frankfurt am Main (DE)
(72) Erfinder: MÜLLER, Hilmar, 35452 Heuchelheim (DE); GOLL, Manfred, 63695 Glauburg 2 (DE)
(74) Vertreter: Beck, Jörg
(86) Internationale Anmeldenummer: PCT/EP2006/069657
(87) Internationale Veröffentlichungsnummer: WO 2007/082610

(56) Entgegenhaltungen:
- EP-B1- 0 874 751
- EP-B1- 1 238 891
- DE-A1- 10 344 267

## Beschreibung

Die Erfindung betrifft eine Winkelmessvorrichtung gemäß Oberbegriff von Anspruch 1 sowie deren Verwendung.

Winkelmessvorrichtungen werden häufig zur Erfassung des Lenkwinkels in Kraftfahrzeugen zum Beispiel zur Bestimmung des Lenkwinkels in fahrdynamischen Regelungen (ESP) verwendet. Des Weiteren ist die Erfassung des Lenkwinkels auch für Kraftfahrzeugregelungssysteme erforderlich, die einen aktiven Lenkeingriff durchführen.

In diesem Zusammenhang sind Winkelmessvorrichtungen bekannt, die sowohl den absoluten Winkel, innerhalb einer Umdrehung, als auch die Anzahl der Umdrehungen messen können.

Darüber hinaus ist auch bekannt, dass durch die Möglichkeit aktiver Lenkeingriffe durch ein Kraftfahrzeugregelungssystem, besondere Anforderungen an die Verfügbarkeit der Lenkwinkelmessung gestellt werden. So ist es eine spezielle Anforderung eines solchen Kraftfahrzeugregelungssystems an die Winkelmessvorrichtung, während der Zeit unmittelbar nach dem Aktivieren des Kraftfahrzeugs den Lenkwinkel zu kennen, obwohl auch außerhalb des Fahrzeugbetriebs Lenkbewegungen oder indirekte Lenkbewegungen, hervorgerufen durch äußere Störeinflüsse, auftreten können und berücksichtigt werden müssen.

Druckschrift EP 1 238 891 B1 offenbart einen Lenkwinkelsensor, der zusätzlich zu einer Codescheibe, deren Stellung und damit der absolute Winkel innerhalb einer Umdrehung durch Sensoren erfasst wird, ein mechanisch gekoppeltes Zählrad zur Erfassung der Umdrehungsanzahl aufweist. Der absolute Winkel wird aus einer Kombination der Ausgangssignale von zwei Magnetfeldsensoren und der Stellung des Zählrads berechnet. Um mit diesem Sensor direkt nach dem Starten des Kraftfahrzeugs eine absolute Winkelmessung durchführen zu können, muss auch während eines inaktiven Fahrzeugzustandes der Lenkwinkelsensor mit Spannung versorgt werden, wodurch je nach Zeitdauer dieses Zustands die elektrische Energieversorgung des Kraftfahrzeugs stark belastet wird. Darüber hinaus ist die Mechanik relativ aufwändig und verschleißenfällig.

Druckschrift DE 103 44 267 A1 beschreibt ein Verfahren, welches einen halbrelativen Lenkwinkelsensor verwendet. Dabei werden im Zustand ausgeschalteter Zündung des Fahrzeugs Lenkradbewegungen durch den Lenkwinkelsensor erfasst und elektronisch abgespeichert. Bei Betätigung der Zündung werden diese Daten, im Fall dass keine Störungen zu registrieren waren, zur Berechnung des aktuellen Lenkwinkels verwendet. Eine Schwäche dieses Systems ist die Tatsache, dass sowohl der Sensor als auch der elektronische Speicher im inaktiven Fahrzeugzustand mit Energie versorgt werden müssen, was zu Lasten der Fahrzeugbatterie geht. Außerdem wird bei Störungen der Winkel nachkalibriert und kann nicht direkt über den Lenkwinkelsensor erfasst werden. Die Kalibrierung geschieht durch das Feststellen eines Geradeauslaufs während der Fahrt, wobei dieser Geradeauslauf auf Grund des zeitlichen Gierratenverlaufs beurteilt wird.

In Druckschrift EP 0 874 751 B1 wird vorgeschlagen, neben einem Drehwinkelsensor, der innerhalb einer Umdrehung mit Hilfe einer Codierscheibe den absoluten Winkel misst, ein mechanisches Zählwerk zu verwenden. Dabei ist das mechanische Zählwerk mechanisch mit der Codierscheibe gekoppelt und zählt die Umdrehungen. So wird der absolute Drehwinkel zu jedem Zeitpunkt auch über eine Umdrehung hinaus erfasst. Nachteilig bei dieser Konstruktion ist die recht aufwändige Mechanik der Codierscheibe und des Zählwerks, sowie die Mo- mentenübertragung der mechanischen Kopplung, die verschleißanfällig ist und nicht lautlos funktioniert.

Die Aufgabe der vorliegenden Erfindung besteht darin, eine Winkelmessvorrichtung zu beschreiben, die einen Winkel absolut und mit hoher Winkelauflösung über einen Bereich mehrerer Umdrehungen misst, wobei auch im Zustand abgeschalteter Elektronik der resultierende Winkel einer oder mehrerer Winkeländerungen durch die Vorrichtung erfasst wird. Damit soll eine dauernde Energieversorgung der. Sensoren bzw. ein technisch aufwändiges selbstständiges Wecken im Fall einer zu registrierenden Bewegung vermieden werden, so dass die Winkelmessvorrichtung nur dann aktiv ist, wenn das Kraftfahrzeug aktiv ist. Darüber hinaus soll die Vorrichtung einen möglichst geringen Verschleiß, eine möglichst geringe Geräuschentwicklung aufweisen und kostengünstig sein.

Die Aufgabe wird erfindungsgemäß gelöst durch die Winkelmessvorrichtung gemäß Anspruch 1.

Der Erfindung liegt der Gedanke zu Grunde, eine absolute Winkelposition mit Hilfe einer Winkelmessvorrichtung zu messen, wobei ein biegsames Zugelement direkt oder indirekt so über eine Welle geführt wird, deren Drehwinkel erfasst werden soll, dass während einer Drehbewegung der Welle am Innenumfang des biegsamen Zugelements unterschiedliche Umfangsgeschwindigkeiten auftreten. Dadurch erfolgt eine zur Drehbewegung relative Positionsänderung des biegsamen Zugelements, aus der auf den absoluten Drehwinkel der Welle geschlossen wird.

Dadurch, dass das biegsame Zugelement nicht der Momentenübertragung dient, fällt sowohl der mechanische Verschleiß, als auch die Geräuschentwicklung sehr gering aus.

Unter einem biegsamen Zugelement wird ein biegsames Mittel verstanden, dass über einen Innenumfang und über einen Außenumfang geschlossen ist. Beispiele hierfür sind unterschiedliche Ausbildungsformen von Riemen, Bändern, Ketten, Schnüren, Kabeln oder Drähten oder eine Variante eines gegebenenfalls anderen mechanischen Triebmittels.

Unter dem absoluten Gesamtdrehwinkel wird der absolute Winkel über einen Messbereich von mehr als 360° verstanden. Dieser beinhaltet die Informationen über den absoluten Winkel innerhalb einer Umdrehung, sowie die Anzahl der Umdrehungen.

Es ist zweckmäßig, den Außenumfang der jeweiligen Scheibe oder Welle gezahnt auszubilden, wodurch eine Zwangsführung des biegsamen, Zugelements erleichtert wird und ein Schlupf zwischen dem biegsamen Zugelement und der gezahnten Scheibe/Welle verhindert wird.

Vorzugsweise wird aus der Stellung des biegsamen Zugelements auf die Orientierung der Drehrichtung und den absoluten Gesamtdrehwinkel der Welle geschlossen. Dadurch ist für die Messung eines Drehwinkels, in einem Winkelbereich von mehr als 360° nur die Auswertung einer Größe, nämlich die Position des biegsamen Zugelements, nötig und nicht wie allgemein üblich die Auswertung mehrerer Größen.

Alternativ zu einer magnetischen Encodierung und Erfassung wird das biegsame Zugelement zweckmäßigerweise optisch oder taktil erfassbar gekennzeichnet und seine Stellung durch mindestens einen optischen oder taktilen Sensor erfasst. Solche Kennzeichnungen können an das jeweilige Umfeld der Vorrichtung angepasst werden und damit kann auf bestimmte Störeinflüsse, wie externe elektromagnetische Einstrahlung reagiert werden, bzw. deren Einfluss auf die Messung vermieden werden.

Vorzugsweise erfasst ein Sensor den Drehwinkel innerhalb einer Umdrehung und ein weiterer Sensor erfasst die Anzahl der Umdrehungen. Hierdurch lässt sich eine erhöhte Auflösung des Winkels innerhalb einer Umdrehung erzielen und der Berechnungsaufwand der Umdrehungszahl wird vereinfacht.

Vorzugsweise besteht die gesamte Winkelmessvorrichtung aus' einem auf der Welle, deren Drehwinkel erfasst werden soll, fixierten Zahnrad mit zwei unterschiedlichen Durchmessern, wobei über diese unterschiedlichen Durchmesser ein biegsames Zugelement geführt wird. Des Weiteren beinhaltet die Winkelmessvorrichtung eine Platine, auf der.die Verarbeitungselektronik enthalten ist, sowie ein Gehäuse, in welches ein Stecker integriert ist. Eine derartige Konfiguration der Vorrichtung kann relativ leicht in ein Kraftfahrzeug implementiert werden, da über die Verarbeitungselektronik und den Stecker definierte Schnittstellen geschaffen werden können.

Bevorzugt verwendet die Vorrichtung nur einen optischen Abstandssensor. Dieser Abstandssensor ist in axialer Richtung links oder rechts, seitlich der Welle installiert und registriert den Abstand von sich zu der im Folgenden beschriebenen Halbschlaufe des Riemens. Im Rahmen einer Relativbewegung des Riemens wird sein nicht aufliegender Teil je nach Drehrichtung und Drehwinkel ein bestimmtes Stück verschöben. Dabei bildet jeder der beiden nicht aufliegenden Teile des Riemens eine Halbschlaufe, welche je nach Drehrichtung und in Abhängigkeit von der Drehbewegung größer bzw. kleiner wird. Entsprechend des oben erläuterten Abstands verhält sich die relativ zur Drehrichtung gesehene Positionierung des biegsamen Zugelements und damit auch der absolute Drehwinkel. Alternativ kann auch ein anderer Abstandssensor genutzt werden, der in der Lage ist den Abstand mit der erforderlichen Auflösung zu erfassen.

Es ist zweckmäßig, dass die Winkelmessvorrichtung einen Riemen aufweist, der magnetisch encodiert ist. Dabei besteht der Riemen aus einer Mischung elastischen Kunststoffs mit einem Magnetpulver. Durch diese Materialmischung kann durch die Wahl des jeweiligen Kunststoffs die Elastizität und die Formtreue leicht an die einsatzspezifischen Anforderungen angepasst werden und gleichzeitig durch das Beimischen des Magnetpulvers, die nötige Encodierbarkeit erreicht werden.

Insbesondere ist ein wie oben beschriebener codierter Zahnriemen vorgesehen. Diesem ist ein spezieller magnetischer, Index aufgeprägt.

Vorzugsweise umfasst die Datenverarbeitung in der Platine neben einer Winkelberechnung und einer Signalaufbereitung auch Sicherheitskonzepte. Dabei handelt es sich um eine Selbstdiagnose, zu deren Verwirklichung die Daten der bereits installierten Sensoren herangezogen werden, sowie insbesondere mindestens ein weiterer Sensor. Im Rahmen der Selbstdiagnose wird erkannt, falls ein Riss im biegsamen Zugelement aufgetreten ist oder ein unzulässiges Verrutschen desselben vorliegt. Insbesondere umfasst das oben beschriebene Sicherheitskonzept auch einen Schutz gegen Überspannung sowie einen elektronischen Filter, der für die Elektronik schädliche Signalfrequenzen herausfiltert. Diese Störsignale werden in der Regel von außen in die Elektronik und ihre Zuleitungen eingestreut.

Zum besonderen Schutz vor solch ungewollter elektromagnetischer Einstrahlung wird das Gehäuse bevorzugt in elektromagnetisch abschirmender Weise ausgeführt. Dies wird durch geeignete Gehäusematerialien und eine geeignete Gehäuseausführung erreicht,

Zur Ausgestaltung der Datenverarbeitung und dem Zusammenwirken der Vorrichtung mit externen Systemen gibt es alternative Konzepte. Es ist zweckmäßig, die Daten in der Platine lediglich aufzubereiten und analog über den Stecker an externe Systeme, wie das Kraftfahrzeugregelungssystem zu übertragen. Alternativ dazu können in der Platine bereits ein oder mehrere Sensorsignale aufbereitet werden und mit Hilfe eines Analog-digital Wandlers digitalisiert werden. Im Anschluss daran werden diese digitalen Daten in definierter Form, insbesondere durch Verarbeitung in einem Modulator und/oder einem Multiplexer über den Stecker an externe Systeme übertragen.

Insbesondere geschieht diese Übertragung drahtlos. Zu diesem Zweck.werden die Daten beispielsweise durch einen Funksender übertragen. In einer alternativen Form werden die Daten in einem Transponder gespeichert und so von einem externen System ausgelesen.

Es ist zweckmäßig die Spannungsversorgung der Winkelmessvorrichtung über die Signalleitungen aus einem externen System vorzunehmen. Es besteht allerdings auch die Möglichkeit die Vorrichtung direkt mit Versorgungsleitungen auszustatten oder sie mit Hilfe einer langlebigen Batterie zu versorgen.

Die Erfindung ist auch zur Verwendung in einem Lenkwinkelsensor, insbesondere in einem Kraftfahrzeug, vorgesehen.

Die weiter oben beschriebene Winkelmessvorrichtung kann in unterschiedlichen Bereichen zur Messung von absoluten Winkeln und absoluten Gesamtdrehwinkeln verwendet werden. Dabei ist ein Einsatz dieser Winkelmessvorrichtung besonders in Lenkungen von Kraftfahrzeugen, wie Personenkraftwagen, Lastkraftwagen und einspurigen Kraftfahrzeugen zur Bestimmung des Lenkwinkels sinnvoll. Die Daten der Winkelmessvorrichtung werden an das jeweilige Kraftfahrzeugregelungssystem übermittelt, wobei auch direkt nach dem Aktivieren des Kraftfahrzeugs Daten über die absolute Lenkwinkelposition mit guter Genauigkeit zur Verfügung stehen. Aufgrund seiner Eigenschaften ist diese Winkelmessvorrichtung auch gut zur Integration in Konzepte für aktive Lenksysteme geeignet oder für den Einsatz im Rahmen von Kraftfahrzeugregelungssystemen mit aktivem Lenkeingriff.

Des Weiteren besteht die Möglichkeit, die Winkelmessvorrichtung in Bereichen der industriellen Automatisierungstechnik und Regelungstechnik einzusetzen. Ein spezielles Anwendungsgebiet ist dabei die Robotik. Der Arm eines Industrieroboters weist für gewöhnlich sechs Freiheitsgrade auf, von denen einige durch Drehungen des Arms realisiert werden, deren Winkel im Rahmen'einer Regelung erfasst werden müssen.

Weitere bevorzugte Ausführungsformen ergeben sich aus den Unteransprüchen und der nachfolgenden Beschreibung eines Ausführüngsbeispiels an Hand von Figuren

Es zeigen
- Fig. 1: eine Welle mit zwei darauf fixierten, nebeneinander angeordneten Scheiben, über die ein Riemen zwangsgeführt wird, sowie
- Fig. 2: eine Winkelmessvorrichtung, die neben der Mechanik auch die dazugehörige Sensorelektronik in einem Gehäuse integriert.

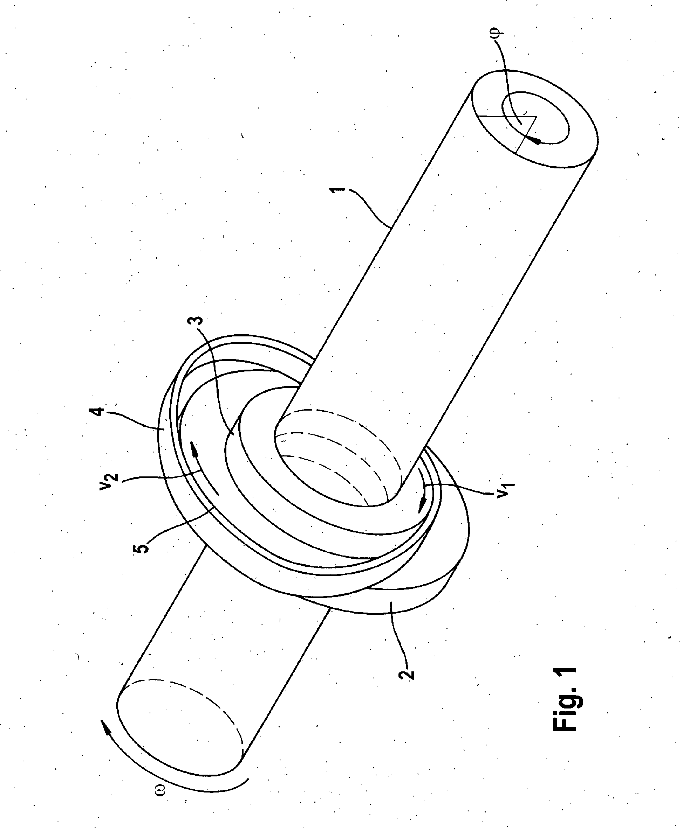

In Fig. 1 sind zwei nebeneinander auf einer Welle 1 fixierte Scheiben 2 und 3 dargestellt. Ein Riemen 4 wird zum einen Teil über Scheibe 2 und zum anderen Teil über Scheibe 3 zwargsgeführt. Während einer Drehbewegung ω der Welle 1 um den Winkel ϕ treten an dem Innenumfang 5 des Riemens 4 unterschiedliche Umfangsgeschwindigkeiten v₁ und v₂, auf. Dabei ist die Umfangsgeschwirld,igkeit v₂, die in dem Bereich auftritt, wo der Riemen 4 auf der Scheibe größeren Umfangs 2 aufliegt, größer, als die Umfangsgeschwindigkeit v₁, die in dem Bereich auftritt, in dem der Riemen 4 auf der Scheibe geringeren Umfangs 3 aufliegt. Durch die Differenz dieser Umfangsgeschwindigkeiten ergibt sich eine Bewegung des Riemens 4, die relativ zur Drehbewegung ω der Welle 1 stattfindet.

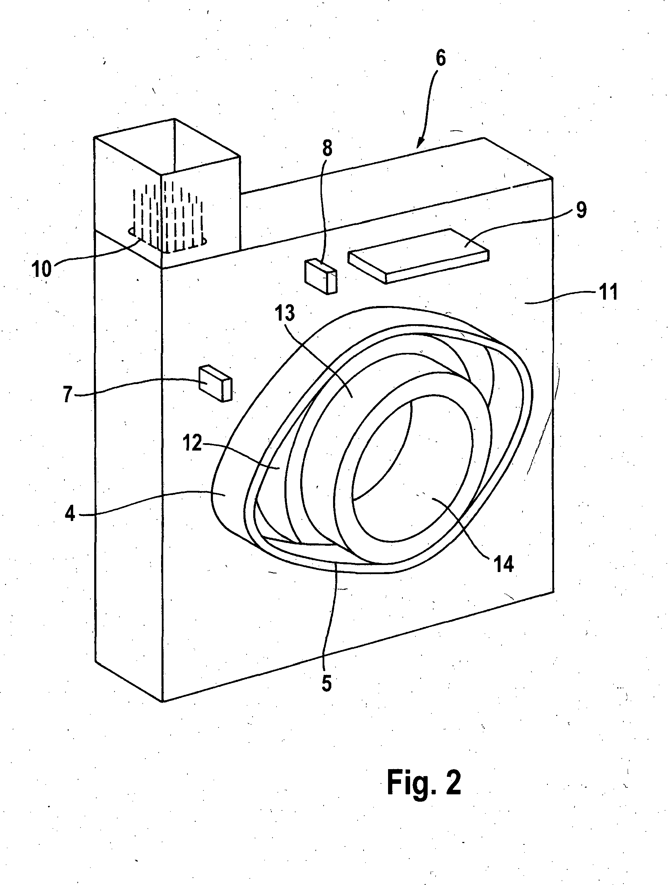

Die in Fig. 2 dargestellte Messwinkelvorrichtung 6 beinhaltet als mechanisches Basiselement eine Scheibe 14, welche zwei unterschiedliche Außenumfänge 12, 13 aufweist, sowie eine axial zentriert angeordnete Bohrung zur Aufnahme einer Welle, deren Drehwinkel erfasst werden soll. Ein Riemen 4 wird dabei jeweils einmal über den größeren Außenumfang 12 und über den kleineren Außenumfang 13 der Scheibe 14 zwangsgeführt. Durch die bei einer Drehung der Scheibe am Innenum-fang 5 des Riemens auftretenden unterschiedlichen Umfangsgeschwindigkeiten, tritt eine Bewegung des Riemens 4 relativ zur Drehbewegung auf. Dabei verschiebt sich der Riemen 4 je nach Drehrichtung und Drehwinkel in_ganz bestimmter Weise auf der Scheibe 14. Diese Verschiebung des Riemens 4 wird von den beiden Sensoren 7 und 8 erfasst. Dabei erfasst der Sensor 8 die Position des Riemens innerhalb einer Umdrehung, indem er die spezielle Encodierung des Riemens ausnutzt. Der Sensor 7 hingegen erfasst die Positionierung des Riemens 4 relativ zur Drehbewegung, aus der auf die Anzahl der Umdrehungen geschlossen wird. Im Rahmen der Relativbewegung des Riemens wird sein nicht aufliegender Teil je nach Drehrichtung und Drehwinkel ein bestimmtes Stück verschoben. Dabei bildet jeder der beiden nicht aufliegenden Teile des Riemens 4 eine Halbschlaufe, welche je nach Drehrichtung und in Abhängigkeit von der Drehbewegung größer bzw. kleiner wird. Aus den Daten der beiden Sensoren 7 und 8 errechnet die Verarbeitungselektronik auf der Platine 9 den absoluten Gesamtdrehwinkel der Scheibe, welcher im Fall einer Fixierung auf einer Welle, gleich dem Drehwinkel dieser Welle ist. Die Winkelinformation wird in digitaler Form über einen in das Gehäuse 11 integrierten Stecker 10 an die Elektronik des Kraftfahrzeugregelungssystems weitergegeben.

## Patentansprüche

1. Winkelmessvorrichtung zur Messung einer absoluten Winkelposition, aufweisend:
- eine Welle (1), deren Drehwinkel (ϕ) erfasst werden soll,
- eine Scheibe mit zwei Segmenten (12), (13) unterschiedlichen Außenumfangs oder zwei auf einer Achse nebeneinander angeordnete Scheiben (2), (3) unterschiedlichen Außenumfangs, die axial auf einer Welle angeordnet sind,
- ein biegsames Zugelement (4) mit einer mittels eines jeweiligen Sensors erfassbare magnetische Encodierung oder optische oder taktile Kennzeichnung, das direkt oder indirekt über die Welle (1) und/oder über die Scheibe/Scheiben geführt wird, wobei während einer Drehbewegung der Welle (1), an dem Innenumfang (5) des biegsamen Zugelements (4) unterschiedliche Umfangsgeschwindigkeiten (v₁, v₂) auftreten, wodurch eine zur Drehbewegung relative Positionsänderung des biegsamen Zugelements (4) erfolgt, aus der auf den Drehwinkel (ϕ) der Welle (1) geschlossen wird.

2. Vorrichtung nach Anspruch 1, **dadurch gekennzeichnet, dass** eine Scheibe mit einem gleichförmigen Übergang von einem kleinen zu einem großen Außenumfang oder eine Scheibe (14) mit zwei Segmenten (12), (13) unterschiedlichen Außenumfangs oder zwei auf einer Achse nebeneinander angeordnete Scheiben (2), (3) unterschiedlichen Außenumfangs an der Welle (1), deren Drehwinkel (ϕ) erfasst werden soll, axial fixiert ist/sind, wobei über diese Scheibe/Scheiben (2), (3), (14) ein biegsames Zugelement (4) zu einem Teil über den kleineren Scheibenumfang und zum anderen Teil über den größeren Scheibenumfang geführt wird.

3. Vorrichtung nach mindestens einem der Ansprüche 1 bis 2, **dadurch gekennzeichnet, dass** der Außenumfang der jeweiligen Scheibe (2), (3), (14) oder der Welle (1) gezahnt ausgebildet ist.

4. Vorrichtung nach mindestens einem der Ansprüche 1 bis 3, **dadurch gekennzeichnet, dass** aus der Stellung des biegsamen Zugelements (4), die sich in Abhängigkeit von der Orientierung der Drehrichtung und in Abhängigkeit des Drehwinkels (ϕ) der Welle (1) ändert, auf die Orientierung der Drehrichtung und den absoluten Gesamtdrehwinkel (ϕ) der Welle (1) geschlossen wird.

5. Vorrichtung nach mindestens einem der Ansprüche 1 bis 4, **dadurch gekennzeichnet, dass** das biegsame Zugelement (4) magnetisch encodiert ist und dass die Stellung des magnetisch encodierten, biegsamen Zugelements (4) durch mindestens einen Magnetsensor erfasst wird.

6. Vorrichtung nach mindestens einem der Ansprüche 1 bis 5, **dadurch gekennzeichnet, dass** das biegsame Zugelement (4) optisch oder taktil erfassbar gekennzeichnet ist bzw. Kennzeichnungen aufweist und dass die Stellung des biegsamen Zugelements (4) durch mindestens einen optischen oder taktilen Sensor erfasst wird.

7. Vorrichtung nach mindestens einem der Ansprüche 1 bis 6, **dadurch gekennzeichnet, dass** ein Sensor (8) den Drehwinkel (ϕ) innerhalb einer Umdrehung erfasst und ein weiterer Sensor (7) die Anzahl der Umdrehungen erfasst.

8. Vorrichtung nach mindestens einem der Ansprüche 1 bis 9, **dadurch gekennzeichnet, dass** die gesamte Winkelmessvorrichtung (6) aus einem auf der Welle (1), deren Drehwinkel (ϕ) erfasst werden soll, fixierten Zahnrad mit zwei unterschiedlichen Durchmessern, einem über die unterschiedlichen Durchmesser des Zahnrades geführten biegsamen Zugelement (4), einer Platine (9) mit der Verarbeitungselektronik und einem Gehäuse (11) mit integriertem Stecker (10) besteht.

9. Verwendung der Vorrichtung gemäß mindestens einem der Ansprüche 1 bis 8 in einem Lenkwinkelsensor, insbesondere für Kraftfahrzeuge.

## Claims

1. Angle measuring apparatus for measuring an absolute angular position, comprising:
- a shaft (1), of which the angle of rotation (ϕ) is to be measured;
- a disc having two segments (12), (13) of different external circumference or two discs (2), (3) of different external circumference arranged beside each other on an axis, which are arranged axially on a shaft,
- a flexible traction element (4) having a magnetic code or optical or tactile identifier which can be detected by means of a respective sensor, which is guided directly or indirectly over the shaft (1) and/or over the disc/discs, wherein, during a rotational movement of the shaft (1), different circumferential speeds (v₁, v₂) occur on the inner circumference (5) of the flexible traction element (4), by which means a change is made in the position of the flexible traction element (4) relative to the rotational movement, from which conclusions are drawn about the angle of rotation (ϕ) of the shaft (1).

2. Apparatus according to Claim 1, **characterized in that** a disc having a uniform transition from a small to a large external circumference or a disc (14) having two segments (12), (13) of different external circumference or two discs (2), (3) of different external circumference arranged beside each other on an axis is/are fixed axially on the shaft (1) of which the angle of rotation (ϕ) is to be detected, wherein, over this disc/these discs (2), (3), (14), one part of a flexible traction element (4) is guided over the smaller disc circumference and the other part is guided over the larger disc circumference.

3. Apparatus according to at least one of Claims 1 to 2, **characterized in that** the external circumference of the respective disc (2), (3), (4) or the shaft (1) is of toothed form.

4. Apparatus according to at least one of Claims 1 to 3, **characterized in that**, from the position of the flexible traction element (4), which changes as a function of the orientation of the direction of rotation and as a function of the angle of rotation (ϕ) of the shaft (1), conclusions are drawn about the orientation of the direction of rotation and the absolute total angle of rotation (ϕ) of the shaft (1).

5. Apparatus according to at least one of Claims 1 to 4, **characterized in that** the flexible traction element (4) is magnetically encoded, and **in that** the position of the magnetically encoded flexible traction element (4) is detected by at least one magnetic sensor.

6. Apparatus according to at least one of Claims 1 to 5, **characterized in that** the flexible traction element (4) is characterized or has identifiers such that it can be detected optically or by touch, and **in that** the position of the flexible traction element (4) is detected by at least one optical or tactile sensor.

7. Apparatus according to at least one of Claims 1 to 6, **characterized in that** one sensor (8) detects the angle of rotation (ϕ) within one revolution, and a further sensor (7) detects the number of revolutions.

8. Apparatus according to at least one of Claims 1 to 7, **characterized in that** the whole of the angle measuring apparatus (6) comprises a gear wheel having two different diameters, which is fixed to the shaft (1) of which the angle of rotation (ϕ) is to be detected, a flexible traction element (4) guided over the different diameters of the gear wheel, a circuit board (9) having the processing electronics, and a housing (11) with integrated connector (10).

9. Use of the apparatus according to at least one of Claims 1 to 8 in a steering angle sensor, in particular for motor vehicles.

## Revendications

1. Dispositif de mesure d'angle permettant de mesurer une position angulaire absolue et présentant :
un arbre (1) dont l'angle de rotation (ϕ) doit être saisi,
un disque doté de deux segments (12), (13) qui présentent différentes périphéries extérieures ou deux disques (2), (3) disposés l'un à côté de l'autre sur un axe et de périphéries extérieures différentes, disposés axialement sur un arbre,
un élément flexible de traction (4) doté d'un code magnétique apte à être saisi au moyen d'un capteur respectif ou d'une caractérisation optique ou tactile, guidé directement ou indirectement au-dessus de l'arbre (1) et/ou au-dessus du ou des disques, différentes vitesses périphériques (v₁, v₂) s'établissant à la périphérie intérieure (5) de l'élément flexible de traction (4) pendant un déplacement de rotation de l'arbre (1), grâce à quoi une modification de la position de l'élément flexible de traction (4) a lieu par rapport au déplacement de rotation, ce qui permet de tirer une conclusion sur l'angle de rotation (ϕ) de l'arbre (1).

2. Dispositif selon la revendication 1, **caractérisé en ce qu'**un disque qui présente une transition uniforme d'une petite périphérie extérieure à une grande périphérique extérieure ou un disque (14) doté de deux segments (12), (13) de périphéries extérieures différentes ou deux disques (2), (3) de périphéries extérieures différentes disposés l'un à côté de l'autre sur un axe étant fixés axialement sur l'arbre (1) dont l'angle de rotation (ϕ) doit être saisi, un élément flexible de traction (4) étant guidé sur ce ou ces disques (2), (3), (14) en partie au-dessus de la petite périphérie du disque et en partie sur la grande périphérie du disque.

3. Dispositif selon au moins l'une des revendications 1 et 2, **caractérisé en ce que** la périphérie extérieure de chaque disque (2), (3), (14) ou de l'arbre (1) est dentée.

4. Dispositif selon au moins l'une des revendications 1 à 3, **caractérisé en ce que** l'orientation du sens de rotation et l'angle de rotation total absolu (ϕ) de l'arbre (1) peuvent être déduits à partir de la position de l'élément flexible de traction (4) qui se modifie en fonction de l'orientation du sens de rotation et en fonction de l'angle de rotation (ϕ) de l'arbre (1).

5. Dispositif selon au moins l'une des revendications 1 à 4, **caractérisé en ce que** l'élément flexible de traction (4) est codé magnétiquement et **en ce que** la position de l'élément flexible de traction (4) codé magnétiquement est saisi par au moins un capteur magnétique.

6. Dispositif selon au moins l'une des revendications 1 à 5, **caractérisé en ce que** l'élément flexible de traction (4) est caractérisé de manière à pouvoir être saisi optiquement ou tactilement ou présente des caractérisations et **en ce que** la position de l'élément flexible de traction (4) est saisie par au moins un capteur optique ou tactile.

7. Dispositif selon au moins l'une des revendications 1 à 6, **caractérisé en ce qu'**un capteur (8) saisit l'angle de rotation (ϕ) au cours d'un tour et **en ce qu'**un autre capteur (7) saisit le nombre de tours.

8. Dispositif selon au moins l'une des revendications 1 à 7, **caractérisé en ce que** l'ensemble du dispositif (6) de mesure d'angle est constitué d'une roue dentée fixée sur l'arbre (1) dont l'angle de rotation (ϕ) doit être saisi et présentant deux diamètres différents, d'un élément flexible de traction (4) guidé au-dessus des diamètres différents de la roue dentée, d'une carte de circuit (9) qui porte l'électronique de traitement et d'un boîtier (11) à laquelle est intégrée une fiche (10).

9. Utilisation du dispositif selon au moins l'une des revendications 1 à 8 dans un capteur d'angle de braquage, en particulier de véhicules automobiles.
